(19) Europäisches Patentamt
European Patent Office
Office européen des brevets

(11) EP 4 672 759 A1

(12) EUROPEAN PATENT APPLICATION

(43) Date of publication:
31.12.2025 Bulletin 2026/01

(51) International Patent Classification (IPC):
H04N 19/85 (2014.01)          G06N 3/045 (2023.01)
G06N 3/084 (2023.01)

(21) Application number: 24386075.6

(22) Date of filing: 26.06.2024

(52) Cooperative Patent Classification (CPC):
H04N 19/85; G06N 3/045; G06N 3/084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Sony Interactive Entertainment Europe
Limited
London W1F 7LP (GB)

(72) Inventors:
• Khan, Muhammed Umar Karim
London, E14 5HU (GB)
• Chadha, Aaron
London, E14 5HU (GB)
• Anam, Mohammed Ashraful
London, E14 5HU (GB)
• Andreopoulos, Ioannis
London, E14 5HU (GB)

(74) Representative: Gill Jennings & Every LLP
The Broadgate Tower
20 Primrose Street
London EC2A 2ES (GB)

(54) **PROCESSING IMAGE DATA**

(57) A method of processing image data, comprising receiving, at a pre-processing artificial neural network, ANN, image data of one or more images, pre-processing the received image data at the pre-processing ANN to generate pre-processed image data of the one or more images, encoding and decoding, in accordance with an image or video codec, the pre-processed image data to generate decoded image data of the one or more images, and post-processing the decoded image data at a post-processing ANN to generate post-processed image data of the one or more images. The pre-processing ANN and the post-processing ANN are jointly trained in an end-to-end manner using a neural codec model arranged between the pre-processing ANN and the post-processing ANN, the neural codec model acting as a proxy for the image or video codec and comprising an ANN configured to emulate rate and distortion characteristics of the image or video codec.

500

| Receive image data at pre-processing ANN | 510 |
| Pre-process image data at pre-processing ANN | 520 |
| Encode pre-processed image data using codec | 530 |
| Decode encoded image data using codec | 540 |
| Post-process decoded image data at post-processing ANN | 550 |

Fig. 5

EP 4 672 759 A1

**Description**

Technical Field

The present disclosure concerns computer-implemented methods for processing image data. The disclosure is particularly, but not exclusively, applicable where the image data is video data.

Background

Signal-to-noise (SNR) ratio may be a relatively poor indicator of visual quality in image or video coding. Instead, quality scores that include elements of human perception, perceptual modelling of encoding artifacts, as well as viewing setup awareness, are emerging as superior means to objectively characterize visual quality. This has led to a move away from SNR-optimization in favour of structural similarity (SSIM), video multimethod assessment fusion (VMAF) and advanced video quality tool (AVQT) optimization. However, all current perceptual optimization approaches in standards-based image or video encoders have one or more of the following detriments.

First, they may require multiple encoding passes or in-loop implementation within a specific encoder software or hardware library. Second, they may optimize for a single quality scoring method like VMAF or SSIM and are shown to be detrimental in other quality scores. Third, they may comprise hand-crafted (shallow) models of low-level human perception and fail to encapsulate several characteristics of more advanced quality scoring methods like VMAF or AVQT in a data-driven and learnable manner. Fourth, their Bjontegaard Delta-rate (BD-rate) improvement on well-established quality scores like SSIM, VMAF and AVQT may be relatively minor, e.g. only be in the order of a few percentile points. Fifth, they may comprise entirely neural approaches which are not compatible with (or do not use) widely-used standards-based encoders.

The present disclosure seeks to solve or mitigate some or all of these above-mentioned problems. Alternatively and/or additionally, aspects of the present disclosure seek to provide improved methods for processing image data.

Summary

In accordance with a first aspect of the present disclosure there is provided a computer-implemented method of processing image data, the method comprising:

> receiving, at a pre-processing artificial neural network, ANN, image data of one or more images;
> pre-processing the received image data at the pre-processing ANN to generate pre-processed image data of the one or more images;
> encoding, in accordance with an image or video codec, the pre-processed image data to generate encoded image data of the one or more images;
> decoding, in accordance with the image or video codec, the encoded image data to generate decoded image data of the one or more images; and
> post-processing the decoded image data at a post-processing ANN to generate post-processed image data of the one or more images,
> wherein the pre-processing ANN and the post-processing ANN are jointly trained in an end-to-end manner using a neural codec model arranged between the pre-processing ANN and the post-processing ANN, the neural codec model acting as a proxy for the image or video codec and comprising an ANN configured to emulate rate and distortion characteristics of the image or video codec.

By using a pre-processing ANN and a post-processing ANN either side of an image or video codec (which may be a standards-based codec), the coding efficiency of the codec is improved for a given image quality. Thus, bitrate savings are achieved over state-of-the-art standards-based codecs. Similarly, for a given coding bitrate, the resulting perceptual image quality is improved. Any image or video codec may be used between the pre-processing ANN and post-processing ANN. Moreover, by jointly training the pre-processing ANN and the post-processing ANN in an end-to-end manner, the neural pre-processing ANN and post-processing ANN can learn to embed, remove and recover information in a codec-aware manner, thus improving the rate-quality performance of the codec. That is, the pre-processing ANN, once trained, can embed information into the source image which does not significantly increase the bitrate and can survive the codec compression. This information is then used by the post-processing ANN to reconstruct the source image. 'Training' a neural network as described herein refers to adjusting (or 'updating') the parameters of the neural network, e.g. the weights of the neural network that will be applied to image data to process the image data. A single 'neural wrapper' model is thereby established (comprising the pre-processing ANN and the post-processing ANN, which are configured to act either side of a codec) and used for the entire rate-quality curve without needing any downscaling or upscaling. Jointly training the pre- and post-processor in an end-to-end manner (e.g. adjusting the parameters of both neural networks in one step) provides an improvement in their resulting performance compared to a case in which the neural networks are not trained together (i.e. as a single 'neural wrapper' model). Indeed, jointly training the pre-processing ANN and the post-processing ANN is able to achieve substantial BD-rate gains across various quality scores. Using a neural codec model as a proxy (or 'substitute') for the codec, arranged between the pre-processing ANN and the post-processing ANN, allows an end-to-end backpropagation of gradients from the post-processing ANN to the pre-processing ANN, thereby enabling the parameters of both of the 'neural wrapper' elements to be adjusted together. In particular, in embodiments, the image or video codec is not differentiable. This may be the case where the image or video codec is a standards-based codec, for example. The neural codec model can thus act as a proxy for the actual codec to allow end-to-end training of the 'neural wrapper' elements. Moreover, since the neural codec model is configured to emulate the rate and distortion behaviour of the actual codec, the 'neural wrapper' elements (i.e. the pre-processing ANN and the post-processing ANN) are still able to improve the processing of image data in a codec-aware manner.

Each of the pre-processing ANN, post-processing ANN and neural codec model may comprise a respective set of interconnected weights, which may be applied to image data to process the image data. Each of these neural networks is configured to receive first image data (e.g. pixel data) and output second image data (e.g. pixel data), after applying the weights of the network to the input data. Each of the neural networks may thus be configured to perform a regression task, as opposed to a classification task. Accordingly, the 'pre-processed image data' and 'post-processed image data' mentioned above may comprise pixel data. That is, each of the pre-processing ANN and post-processing ANN may be configured to map input pixel groups to transformed output pixel groups. The transformed pixel data produced by the pre-processing ANN may be passed to an encoder for encoding and then a decoder for decoding (which may occur at a single location or at different locations, e.g. encoding at a server and subsequently decoding at a client device), and the decoded pixel data may then be passed to the post-processing ANN, which further transforms the pixel data. Alternatively, the image data input to and/or produced by the ANNs may comprise residual data, intra or inter prediction data, features of a latent image representation, etc.

As mentioned above, the neural codec model is arranged between the pre-processing ANN and post-processing ANN when the pre-processing ANN and post-processing ANN are trained. This means that, for example, when gradients are back-propagated end-to-end, they flow from the post-processing ANN to the pre-processing ANN via the neural codec model. Joint training of the pre-processing ANN and post-processing ANN refers to the ability for the parameters (e.g. weights) of the pre-processing ANN and post-processing ANN to both be adjusted at each iteration, rather than training the two neural networks in turn.

It will be understood that the joint training of the pre-processing ANN and the post-processing ANN may occur prior to the processing of the image data described above. That is, when the above-described method is performed, the training of the pre-processing ANN and the post-processing ANN (using the neural codec model) may have already taken place. In alternative embodiments, the joint training of the pre-processing ANN and the post-processing ANN occurs as part of the above-described method.

In embodiments, encoding the pre-processed image data in accordance with the image or video codec comprises encoding the pre-processed image data using an encoder that is operating in accordance with the codec. An encoder that is operating in accordance with the codec may itself be referred to as a 'codec'. That is, the codec may comprise a set of instructions according to which the image data is to be encoded, and/or may comprise a device that is executing such instructions. Similarly, decoding the image data in accordance with the codec may comprise using a decoder that is operating in accordance with the codec (i.e. in accordance with the instructions laid down by the codec, which may be a standard codec). A decoder that is operating in accordance with the codec may itself be referred to as a 'codec'. It will be understood that the encoding and decoding steps may occur at two separate locations. For example, the pre-processed image data may be encoded (in accordance with the codec) at a server, and the encoded image data may be transmitted as a bitstream to a client device, which performs the decoding and post-processing steps. That is, the encoder and the decoder themselves may be separated, although both operate in accordance with the image or video codec. Alternatively, both encoding and decoding may be performed at a single location (e.g. on a single device) in some cases.

In embodiments, the neural codec model is trained in an alternating manner with respect to the joint training of the pre-processor and the post-processor. The joint training of the pre-processing ANN and post-processing ANN and/or the training of the neural codec model in an alternating manner with respect to the joint training, optimises a combination of: an encoding bitrate associated with encoding image data using the neural codec model, and at least one image quality metric of post-processed image data generated by the post-processing ANN. Accordingly, the neural codec model may be adjusted alongside the pre-processing ANN and the post-processing ANN. An 'alternating manner' as mentioned herein refers to, at each iteration of the training process, updating the neural codec model in a first step and jointly updating the pre-processing ANN and post-processing ANN in a second step. By iteratively adjusting the neural codec model in this manner, the rate-distortion behaviour of the neural codec model (e.g. in emulating the behaviour of the image or video codec) may be improved, thereby further improving the resulting performance of the 'neural wrapper' elements (i.e. the pre-processing ANN and post-processing ANN). Emulating, or modelling, the rate-distortion characteristics of the image or video codec refers to aligning the neural codec model to the image or video codec both in terms of distortion (e.g. the distortion of an image having passed through the image or video codec) and rate (e.g. the bitrate associated with encoding an image using the image or video codec).

In embodiments, the pre-processing ANN and the post-processing ANN are trained using the image or video codec in addition to the neural codec model. This further improves the resulting performance of the 'neural wrapper' elements (i.e. the pre-processing ANN and the post-processing ANN) in improving the efficiency of the codec, compared to a case in which only the codec or only the neural codec model are used in training.

In embodiments, the pre-processing ANN and post-processing ANN are jointly trained using an end-to-end back-propagation training process comprising a forward pass and a backward pass. During the forward pass, image data is passed from the image or video codec to the post-processing ANN. During the backward pass, gradients are back-propagated from the post-processing ANN to the neural codec model. This provides an improvement in the resulting performance of the pre-processing ANN and post-processing ANN (in terms of improving the efficiency of the codec) compared to a case in which the neural codec model, and not the actual codec, is used for the forward pass. As such, in embodiments, the pre-processing ANN and post-processing ANN are jointly trained by passing image data generated by the image or video codec to the post-processing ANN. In alternative embodiments, during the forward pass, image data is passed from both the actual codec and the neural codec model to the post-processing ANN. That is, the input to the post-processing ANN may comprise a combination of the outputs of the image or video codec and of the neural codec model. Moreover, by using the neural codec model for the backward pass, gradients can be backpropagated end-to-end from the post-processing ANN, thereby allowing joint updating of the parameters of the pre-processing ANN and post-processing ANN.

In embodiments, the pre-processing ANN and the post-processing ANN are trained using a stop-gradient operation. The stop-gradient operation selectively prevents gradients from flowing through particular paths. In embodiments, the stop-gradient operation is used to generate an input for the post-processing ANN (e.g. from the neural codec model and/or the image or video codec). The stop-gradient operation may allow frames generated by the image or video codec to be passed to the post-processing ANN whilst still using the codec model for backpropagation. Moreover, using the stop-gradient operation compensates for a domain shift between the pre-processing ANN and the source during training, which increases as end-to-end training progresses; the stop-gradient operation provides an alignment constraint on the neural codec model, which improves its resulting rate-quality performance. Other methods of training the pre-processing ANN and post-processing ANN (including methods omitting a stop-gradient operation) may be employed in alternative embodiments.

In embodiments, prior to the joint training of the pre-processing ANN and the post-processing ANN, the neural codec model is pre-trained to model the behaviour of the image or video codec. In particular, the neural codec model may be pre-trained to align it (in terms of both rate and distortion) to the existing image or video codec, so as to try to replicate the behaviour of the image or video codec. As such, the training of the system disclosed herein may comprise two overall phases: an initial pre-training of the neural codec model, and then a joint training of the pre-processing ANN and post-processing ANN using the pre-trained neural codec model. The pre-trained neural codec model may be further trained or adjusted alongside (e.g. in alternating manner with) the joint training of the pre-processing ANN and the post-processing ANN. In embodiments, the neural codec model is pre-trained based on an implicit encoder-decoder structure of the neural codec model. This may be a more flexible and/or versatile approach than approximating the codec or its functions explicitly. In embodiments, a hyperprior-based architecture is used for the neural codec model. In embodiments, a two-stage pre-training process of the neural codec model is used. In the first stage, neural codec model is trained to model the distortion behaviour of the image or video codec, and in the second stage, the neural codec model is aligned to the image or video codec in terms of bitrate behaviour. Such learning may be performed in an unsupervised manner.

In embodiments, the at least one image quality metric comprises at least one of: an L 1 metric, a structural similarity index metric, and a video multi-method assessment fusion quality metric. In embodiments, the at least one image quality metric comprises a weighted combination of the above-mentioned metrics. Other image quality metrics may be used in alternative embodiments.

In embodiments, the pre-processing ANN and the post-processing ANN are trained by deriving a differentiable approximation of the at least one image quality metric, and using the differentiable approximation as a loss function. Deriving and using differentiable approximations of the quality metrics enables such quality metrics to be used as loss functions (or part of a loss function) for end-to-end training of the image processing pipeline.

In embodiments, the image or video codec is a standard image or video codec conforming to an image or video coding standard. In some cases, the image or video codec is a proprietary codec. The image or video codec itself is not modified as a consequence of the presently-disclosed methods. Instead, the neural wrapper elements (the pre-processing ANN and post-processing ANN) are provided either side of the codec in the image processing pipeline, to improve the rate-quality performance of the codec. In alternative embodiments, the image or video codec is not a standard image codec.

In accordance with another aspect of the present disclosure there is provided a computer-implemented method of configuring an image processing pipeline, the image processing pipeline comprising a pre-processing artificial neural network, ANN, configured to pre-process image data prior to encoding the image data, and a post-processing ANN configured to post-process image data after encoding and decoding the image data, the method comprising:

receiving, at the pre-processing ANN, image data of one or more training images;
pre-processing the received image data at the pre-processing ANN to generate pre-processed image data of the one or more training images;
encoding, in accordance with an image or video codec, the pre-processed image data to generate encoded image data of the one or more training images;
decoding, in accordance with the image or video codec, the encoded image data to generate decoded image data of the one or more training images;
post-processing the decoded image data at the post-processing ANN to generate post-processed image data of the one or more training images;
determining a loss function on the basis of the post-processed image data;
based on the loss function, performing a back-propagation operation using a neural codec model arranged between the pre-processing ANN and the post-processing ANN, the neural codec model acting as a proxy for the image or video codec, the neural codec model comprising an ANN configured to emulate rate and distortion characteristics of the image or video codec; and
updating parameters of the pre-processing ANN and the post-processing ANN based on the back-propagation operation, thereby to configure the image processing pipeline.

As such, the actual image or video codec is used to encode and decode the pre-processed training images, and deliver an output to the post-processing ANN, whereas the neural codec model (which comprises an ANN) is used for the back-propagation operation, to allow gradients to be passed end-to-end from the post-processing ANN to the pre-processing ANN. Accordingly, both the actual codec and the neural codec model are used in the training process. This provides an improvement in the resulting performance of the pre-processing ANN and post-processing ANN (in terms of acting to improve the rate-quality performance of the image or video codec) compared to a case in which only the image or video codec, or only the neural codec model, is used. In embodiments, the image or video codec is not differentiable. For example, the image or video codec may comprise a standards-based codec.

In embodiments, the method comprises updating parameters of the neural codec model in an alternating manner with respect to the updating the parameters of the pre-processing ANN and the post-processing ANN. This allows the neural codec model to be iteratively updated along with the pre-processing ANN and post-processing ANN. By adjusting the neural codec model in this way, the rate-distortion behaviour of the neural codec model may be improved (in particular to emulate the behaviour of the image or video codec), which further improves the resulting performance of the pre-processing ANN and post-processing ANN.

In embodiments, the parameters of the pre-processing ANN and the post-processing ANN are updated to optimise a combination of: an encoding bitrate associated with encoding image data using the neural codec model, and at least one image quality metric of post-processed image data generated by the post-processing ANN. One or both of these factors may contribute to the loss function mentioned above. Other loss functions may be used in alternative embodiments.

In embodiments, the back-propagation operation comprises a stop-gradient operation. This may allow frames generated by the image or video codec to be passed to the post-processing ANN (in a forward pass) whilst using the codec model for backpropagation of gradients.

In embodiments, the method comprises, prior to receiving the image data at the pre-processing ANN, pre-training the neural codec model to model the behaviour of the image or video codec. Pre-training the neural codec model improves the training of the pre-processing ANN and post-processing ANN. The pre-training may be in addition to, or an alternative to, the iterative parameter updates of the neural codec model (in an alternating manner with respect to the updating the parameters of the pre-processing ANN and the post-processing ANN) described above. Preferably, both are performed. That is, the neural codec model is pre-trained to model the behaviour of the codec, and then, during joint training of the pre-processing ANN and post-processing ANN, the parameters of the neural codec model are updated, to further improve rate-distortion performance.

The methods of processing image data described herein may be performed on a batch of video data, e.g. a complete video file for a movie or the like, or on a stream of video data.

In accordance with another aspect of the disclosure there is provided a computing system comprising:

one or more processors; and
memory;
wherein the computing system is arranged to perform, using the one or more processors, any of the methods described above. The computing system may comprise one or multiple computing devices.

In accordance with another aspect of the disclosure there is provided a computer program product arranged, when executed on a computing system comprising one or more processors and memory, to cause the computing system to perform, using the one or more processors, any of the methods described above.

It will of course be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic workflow diagram showing an image processing pipeline in accordance with embodiments;
Figure 2 is a schematic workflow diagram showing a training workflow for an image processing pipeline in accordance with embodiments;
Figure 3 shows an example training algorithm ('Algorithm 1') in accordance with embodiments;
Figure 4A is a graph showing VMAF vs bitrate in accordance with embodiments;
Figure 4B is a graph showing MOS vs bitrate in accordance with embodiments;
Figure 5 is a flowchart showing the steps of a method for processing image data in accordance with embodiments;
Figure 6 is a flowchart showing the steps of a method for configuring an image processing pipeline in accordance with embodiments; and
Figure 7 is a schematic diagram of a computing device in accordance with embodiments.

Detailed Description

Standards-based image or video codecs may be considered as rate-distortion optimization machines, where distortion is typically quantified using PSNR (peak signal-to-noise ratio) versus the source. However, it is now becoming accepted that increasing PSNR does not necessarily translate to better visual quality. In the present disclosure, a better balance between perception and fidelity is achieved, in order to provide for significant rate savings over state-of-the-art standards-based image or video codecs. Specifically, pre- and post-processing neural networks are employed, that enhance the coding efficiency of standard image or video codecs when benchmarked with an array of perceptual quality scores. These 'neural wrapper' elements are end-to-end trained with a neural codec model serving as a differentiable proxy for standard image or video codecs. In embodiments, the codec proxy is jointly optimized with the pre- and post-processor components, via a two-phase pre-training strategy and end-to-end iterative refinement with stop-gradient. This allows the neural pre- and post-processors to learn to embed, remove and/or recover information in a codec-aware manner, thus improving its rate-quality performance. A single neural-wrapper model is thereby established and used for the entire rate-quality curve without needing any downscaling or upscaling. The disclosed methods, which are described in more detail below, provide an improvement over standards-based image or video coding methods which not employ the neural wrapper components.

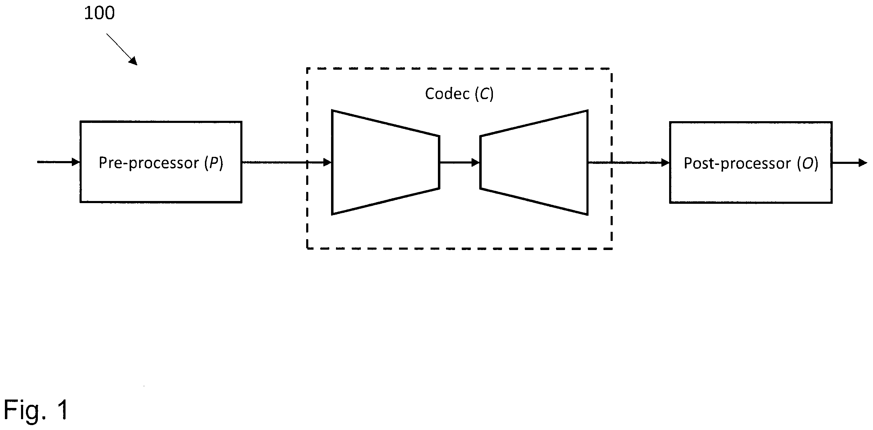

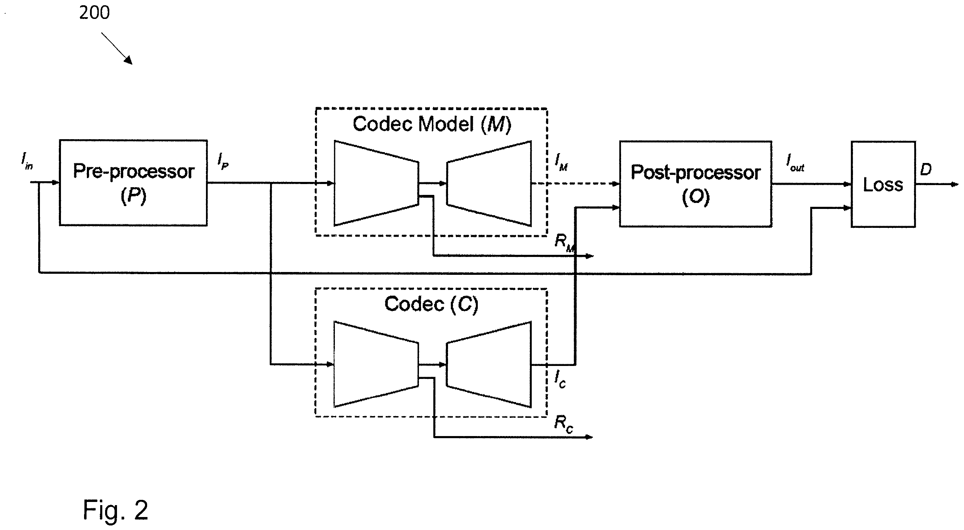

Figure 1 is a schematic diagram showing an image processing pipeline 100 according to embodiments. The image processing pipeline 100 is shown in Figure 1 at an inference (or 'deployment') stage. The training workflow of the image processing pipeline 100 is shown in Figure 2. The image processing pipeline 100 includes a pre-processor, $P$, an image or video codec $C$ (referred to herein as a 'target codec') and a post-processor $O$. The target codec may be a standards-based codec, e.g. a traditional codec such as SVT-AV1. Each of the pre-processor and the post-processor comprises an artificial neural network (ANN). In embodiments, the target codec does not comprise a neural network. A source frame is processed by $P$ to generate a corresponding pre-processed frame. The pre-processed frame is encoded and subsequently decoded by $C$. It will be understood that the encoding and decoding stages of $C$ may be performed at different locations and/or devices. For example, the pre-processed frame may be encoded at a server and then transmitted via a communications network to a client or user device, which performs the decoding stage. After decoding, the frame is post-processed by $O$ to generate an output frame, e.g. for display. The objective of pre- and post-processing is to provide additional rate-distortion savings over target codec deployment alone.

A training workflow 200 for the components shown in Figure 1 will now be described, with reference to Figure 2, according to embodiments. In Figure 2, in addition to the pre-processor $P$, target codec $C$ and post-processor $O$, a codec model $M$ is used. The codec model $M$ comprises an ANN, and may thus be referred to as a 'neural codec model'. The codec model $M$ is configured to act as a proxy (or 'substitute') for the actual codec $C$.

During training, a source frame $I_{in}$ (e.g. a training image) is processed by $P$ to generate a corresponding pre-processed frame $I_P$. The pre-processed frame is simultaneously encoded by both $M$ and $C$, which generate encoded frames $I_M$ and $I_C$ respectively. Finally, encoded frames are post-processed with $O$ to generate the output frame $I_{out}$. End-to-end distortion $D$ is computed between $I_{in}$ and $I_{out}$ and the overall training loss is the weighted sum of $D$ and the bitrate $R_M$

(i.e. the bitrate associated with encoding using *M*). At inference, the codec model *M* is removed from the pipeline and only the target codec *C* is deployed for encoding. Further details of embodiments of the training pipeline will be provided in the subsequent sections.

*Network Architectures*

Each of the pre-processing ANN and post-processing ANN may comprise any combination of weights connected in a network and having a non-linear function (e.g. an activation function). Example instantiations comprise multiple layers of weights and activation functions. Such layers of interconnected weights form an artificial neural network. Such embodiments may be trained with back-propagation of errors computed at the output layer, using gradient descent methods.

A similar network architecture may be used for both the pre- and post-processor. An initial convolutional layer processes an input and produces a 64-channel feature. This is followed by five ResBlocks, each with 64 channels. This is then followed by a final convolutional layer. An additional pixel-shuffle layer may be included in the post-processor before the final convolutional layer for easy adaptation to upscaling if required. In embodiments, both pre- and post-processors have a single frame latency. In embodiments, the pre-processor processes the luma channel only, given that: (i) the human visual system has much higher sensitivity to luminance deviation than chromatic deviation; (ii) luminance contributes substantially more to rate; (iii) it was found empirically that high-frequency information embedded by the pre-processor in the chroma channels is likely to be removed by the target codec and is not propagated to the post-processor. Beyond the reduction of compute by not processing the chroma channels, the trained model may be pruned (post-training) to 16 channels per ResBlock and quantized to int8 precision. Per output pixel, this results in 7.7KMACs and 9.5KMACs for the pre- and post-processor, respectively. Given that pre-processing is applied once for all quality levels, these compute requirements are significantly lower than those of neural codecs like DCVC, which tend to require 350KMACs/pixel or higher. Putting this into context: modern standard codecs (e.g., AV1 and VVC) are in the range of 40KMACs/pixel for encoding and 4KMACS/pixel for decoding; therefore, the presently-disclosed methods, when 'wrapped around' VVC or AV1 standard codecs, reaches: (7.7+40)KMACs/pixel for encoding and (4+9.5)KMACs/pixel for decoding. This totals 61.2KMACs/pixel, which provides a significant reduction in complexity compared with neural codecs.

*Codec Model Pre-training*

Given the target codec C in Figure 2 is not differentiable, a mechanism for adapting the disclosed pipeline to the target codec behaviour is employed. One option is black-box or derivative-free optimization methods. However, these methods typically rely on an approximation of the unknown function to be optimized, and may be computationally infeasible for training at scale. Another option is to replicate the core prediction and transform blocks of the target codec in a differentiable manner. Such approaches may be able to model older codecs such as JPEG, or faster presets of AVC or HEVC. However, they can fail to accurately model the operation of more sophisticated codecs such as AV1 or VVC.

Rather than approximating the codec or its functions explicitly, a neural codec model *M* is adapted to model the rate-distortion behaviour of a target codec C (e.g. to predict the target codec behaviour). Specifically, a scale-space flow architecture may be used to generate lossy frames and the implicit encoder-decoder structure and associated loss functions leveraged to align to the target codec behaviour, in a spatially localized manner. For each of intra, flow and residual encoding, a hyperprior-based architecture may be used, without autoregressive components.

In embodiments, the hyperprior architecture comprises analysis and synthesis transforms, $g_a$ and $g_s$, for encoding to and decoding from the quantized latent space $\tilde{y}$ respectively. A distortion loss $D (.; g_a, g_s)$ can thus be computed between source frame $I_{in}$ (input to $g_a$) and reconstructed frame $I_M$ (output by $g_s$). A hyper-analysis and hyper-synthesis transform ($h_a$ and $h_s$ respectively) constitute the hyperprior, which is used to model scale dependencies within the latent space. The latent space $\tilde{y}$ is thus modelled as a Gaussian scale mixture on which the rate $R (.; h_a, h_s)$ can be optimized (as Shannon entropy). Traditionally, the architecture would then be trained with an aggregate loss function $L = D + \lambda R$, where A represents a Lagrangian parameter for balancing between the rate and distortion components.

When performing neural codec alignment to a target codec, there are two key issues: (i) the model encoded frame must align to the target encoded frame (rather than the source); (ii) selecting the best value for $\lambda$ when trying to replicate target codec behaviour is a non-trivial problem. Specifically, it is noted that the rate is exclusively parameterized by $h_\alpha$ and $h_s$, and distortion exclusively by $g_a$ and $g_s$. Subsequently, a novel two-phase training methodology is proposed for aligning both rate and distortion to the target codec.

Phase 1: The first issue of target codec alignment is addressed via the distortion loss. To this end, the reference for the distortion loss is changed from the source frame $I_{in}$ to the target codec frame $I_C$ and the mean squared error is optimized:

$$D_M^{\text{hyp}}(I_M, I_C; \theta_g) = \mathbb{E}_{I_C}[\|I_M - I_C\|^2] \qquad (1)$$

where $\theta_g$ represents the analysis and synthesis transform parameters.

Phase 2: Following the alignment of $g_a$ and $g_s$ in Phase 1, the latent space $\tilde{y}$ is now conditioned on the target codec $C$. To circumvent selection of an optimal $\lambda$ for rate, the implicit encoder-decoder structural prior of the aligned neural codec is leveraged in order to learn an unsupervised rate alignment to the target codec. Specifically, the maximum likelihood on the hyperprior model parameters is optimized, in order to learn the latent space distribution under target codec distortion alignment. The rate is thus optimized as:

$$R_M^{\text{hyp}}(I_M; \theta_h) = -\mathbb{E}_{\tilde{y}, \tilde{z}}[\log p_{\tilde{y}|\tilde{z}, C}(\tilde{y}|\tilde{z}, C) + \log p_{\tilde{z}|C}(\tilde{z}|C)] \quad (2)$$

where $\theta_h$ represents the hyperprior model parameters and $\tilde{z}$ is the quantized hyperprior latent space (which would also be encoded and transmitted as side information in a neural codec pipeline).

For intra coding, the intra hyperprior model is optimized on intra encoded source frames using the two-phase strategy described above. For inter coding, the residual and flow hyperprior models are optimized jointly by summing the rate and distortion components in each phase. The aggregate rate and distortion for a sequence can thus be measured by computing the sum over all frames.

*End-to-end Training*

With the pre-trained neural codec model $M$, an end-to-end trainable pipeline with both pre- and post-processor is developed (as shown in Figure 2). In this case, the training loss may be similar to known neural codecs, but is now only used to train the pre- and post-processors, i.e.:

$$L(I_{\text{out}}, I_{\text{in}}; \theta_P, \theta_O) = \mathbb{E}_{I_{\text{in}}}[D(I_{\text{in}}, I_{\text{out}}) + \lambda R_M] \quad (3)$$

where $\theta_P$ and $\theta_O$ are the pre- and post-processor parameters, respectively, $R_M$ is the neural codec model rate estimation and $D$ is the distortion loss component. For the distortion component $D$, a weighted sum of: mean absolute error (MAE), SSIM, MS-SSIM and detail loss metric (DLM) is used, based on subjective assessment tests. DLM is a component of VMAF and may better preserve details under visual degradation. DLM is primarily wavelet based, and thus be implemented in a differentiable manner and used for model optimization.

For jointly training the pre- and post-processor, the codec model $M$ is used for gradients to be back-propagated from the post- to the pre-processor. In some cases, however, concept drift or domain shift for the codec model may occur as a consequence of end-to-end training. Namely, the codec model is pre-trained with natural videos, whereas the pre-processor is continuously updated as training proceeds; thus, the data observed by the codec model has a non-stationary distribution. Since neural networks generally may perform less well on out-of-distribution data, it may be advantageous to constrain the end-to-end pipeline.

To this end, it is assumed for the remaining discussion in this section that the tensors representing the frames are flattened, i.e. $\{I_P, I_M, I_C\} \in \mathbb{R}^{N \times 1}$, where $N$ is the number of pixels in the tensor. If the target codec $C$ was differentiable then the accuracy of the gradients backpropagated will increase by decreasing:

$$G = |J_M(I_P)\nabla_{I_M}L - J_C(I_P)\nabla_{I_C}L|, \qquad (4)$$

where $J_M(I_P) \in \mathbb{R}^{N \times N}$ is the transposed Jacobian of $M$ with respect to $I_P$ and $\nabla_{I_M}L$ is the gradient of the objective with respect to $I_M$. Assuming that the frames $I_C$ generated by the target codec $C$ are input to the post-processor $O$, then Equation 4 becomes:

$$G = |(J_M(I_P) - J_C(I_P))\nabla_{I_C}L|, \qquad (5)$$

Since $\nabla^{(j)}_{I_C} L$ is necessary for the networks to train, $J^{(i,j)}_M(I_P) - J^{(i,j)}_C(I_P)$ should be close to zero. Thus,

$$\forall i, j \in [1, N], \left| \frac{\partial I^{(i)}_M}{\partial I^{(j)}_P} - \frac{\partial I^{(i)}_C}{\partial I^{(j)}_P} \right| = \left| \frac{\partial}{\partial I^{(j)}_P} (I^{(i)}_M - I^{(i)}_C) \right| \tag{6}$$

should be minimized. The above analysis can be extended to the rate component. Equation 6 shows that accurate gradients can be backpropagated to the pre-processor if the codec model's output is close to the target codec's output and the input to the post-processor is from the target codec $C$. Therefore, the input to the post-processor may be set as:

$$I_{O_{\text{in}}} = \overline{(I_C - I_M)} + I_M, \tag{7}$$

where $\overline{a}$ indicates a stop-gradient operator applied to the tensor $a$ and $I_C$ is the output of the (non-differentiable) target codec. The stop-gradient operator is used to stop gradients from flowing along a particular path. Equation 7 allows frames generated by the target codec $C$ to be passed to the post-processor (e.g. in a forward pass), whilst using the codec model $M$ for backpropagation (e.g. in a backward pass).

In embodiments, the codec model parameters $\theta_M$ are updated alternately with the parameters of the pre- and post-postprocessor, by minimizing:

$$L_M(I_M, I_C; \theta_M, \alpha, \beta, \sigma_1, \sigma_2) = \mathbb{E}_{I_C} \left[ \frac{1}{\sigma_1^2} \|I_M - I_C\|^2 \right.$$
$$\left. + \frac{1}{\sigma_2^2} \|(\alpha R_M + \beta) - R_C\|^2 + \log(\sigma_1 \sigma_2) \right], \tag{8}$$

where $\alpha$, $\beta$, $\sigma_1$ and $\sigma_2$ are learnable scalar parameters. The loss function is motivated by the uncertainty paradigm for multi-task learning. Whereas $\alpha$ and $\beta$ are responsible for scaling the estimated rate, $\sigma_1$ and $\sigma_2$ are responsible for adjusting the relative weight between the rate and distortion terms, under a normal distribution assumption. The last term acts as a regularization on the weighting.

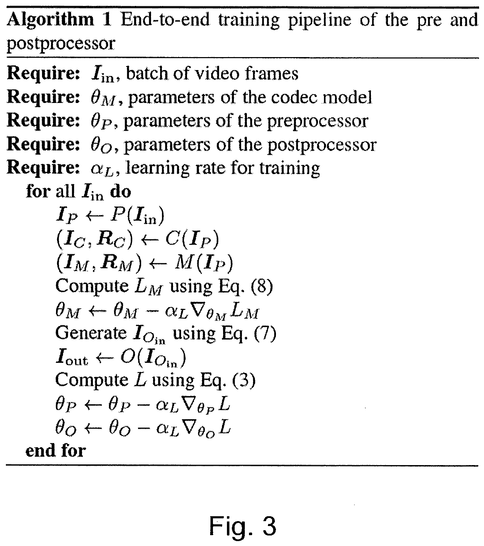

In summary, the disclosed training procedure may have two main steps: iterative update of the codec model and the end-to-end update of the pre- and post-processors. For the end-to-end update, a stop-gradient-based approach may be used. An algorithm for the end-to-end training pipeline is shown in Figure 3 ('Algorithm 1').

In embodiments, at least some of the methods described herein may be implemented by a system comprising a server and a user device (also referred to as a 'client device' or 'display device'). The server and the user device are operable to communicate with one another via one or more communications networks, e.g. a wireless local area network (WLAN), and one or more other networks, such as the Internet. Some parts of the presently-disclosed methods may be performed using the server, and other parts of the presently-disclosed methods may be performed using the user device. For example, during a deployment or inference stage, the server may pre-process and then encode image data and transmit the encoded image data as a bitstream via the communications network to the user device. The user device may then decode the encoded image data and post-process the decoded image data for display. Additionally or alternatively, some of the presently-disclosed methods may be performed entirely by the server and/or entirely by the user device. For example, at least some of the training methods disclosed herein may be performed entirely at a server.

The embodiments described herein are applicable to batch processing, i.e. processing a group of images or video frames together without delay constraints (e.g. an entire video sequence), as well as to stream processing, i.e. processing only a limited subset of a stream of images or video frames, or even a select subset of a single image, e.g. due to delay or buffering constraints. Although image data is discussed herein largely in the context of videos and video codecs, it will be understood that the presently-disclosed methods are also applicable to the processing of single images, e.g. using an image codec.

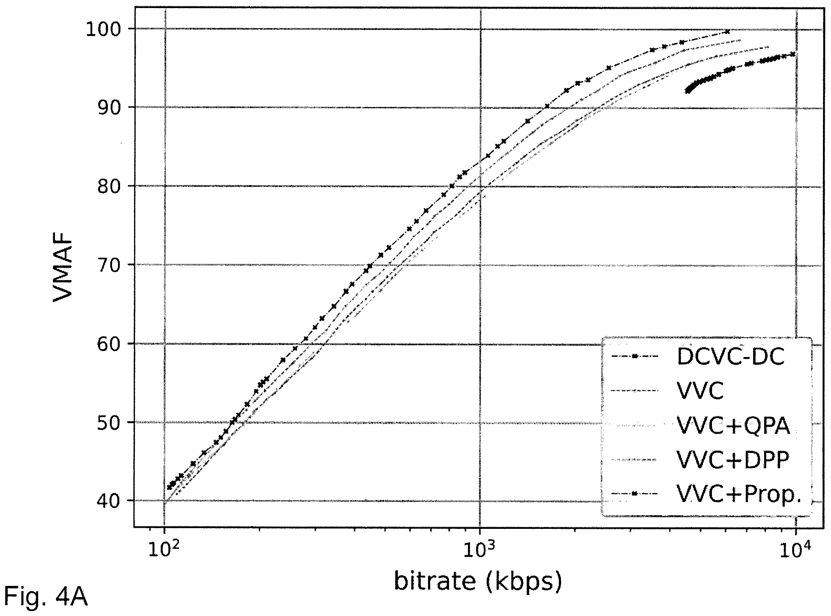

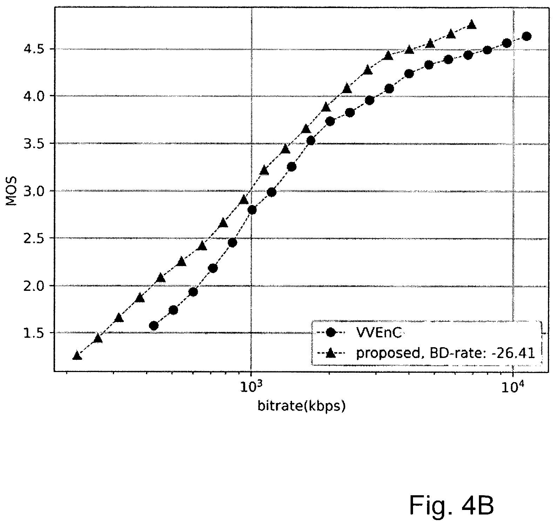

Figure 4A shows an example graph of VMAF vs bitrate for a representative set of image data. The topmost line corresponds to the presently-disclosed 'neural wrapper' elements in combination with the VVC codec, showing an improvement in rate-quality behaviour over the use of the codec alone, the codec in combination with other known methods (e.g. quantization parameter adaptation (QPA) or deep perceptual pre-processing (DPP)), or entirely neural methods such as DCVC-DC. In experiments, the visual quality was assessed objectively. The standard encoder was used without its low-delay limitation, in order to attain its best performance. Similar results were obtained for the AV1 codec, and for other quality scoring metrics, such as SSIM, MS-SSIM and AVQT. Results show that the presently-disclosed approach provides for BD-rate savings of between -5.4% to -30% (with an average of -16%) in comparison to the underlying standard encoders (where the more negative the number, the better). BD-rate savings also tend to be higher for quality scores that are more perceptually-oriented. In comparison to known methods, including neural methods such as DCVC-DC, the presently-disclosed approach is seen to offer significantly more consistent BD-rate improvements over all quality scoring methods. Moreover, unlike DCVC-DC that only covers a limited bitrate-quality range at the very top end (as seen in Figure 4, in which DCVC-DC corresponds to the bottom-most line), the presently disclosed approach outperforms these known methods on the entire "active" region of bitrate-quality, e.g. VMAF of 40-93, and on bitrates ranging from 100kbps to 15mbps, which encapsulates the entirety of commercially-relevant bitrates for 1080p video streaming. It should also be noted that DCVC-DC is entirely neural, and is thus not based on standards-based encoders.

The presently-disclosed methods were also tested using subjective quality assessment, using a 5-scale absolute categorical rating (ACR) test in accordance with ITU-T P.910 testing. A graph of mean opinion score (MOS) vs bitrate for the VVC codec is shown in Figure 4B, which again shows an improvement over using the underlying VVC codec alone. Similar results were obtained for the AV1 codec. The experimental results show that the presently-disclosed methods are better capable of preserving structure, retaining textures, and denoising codec artifacts, than known methods. This visual improvement is reflected in improved MOS scores.

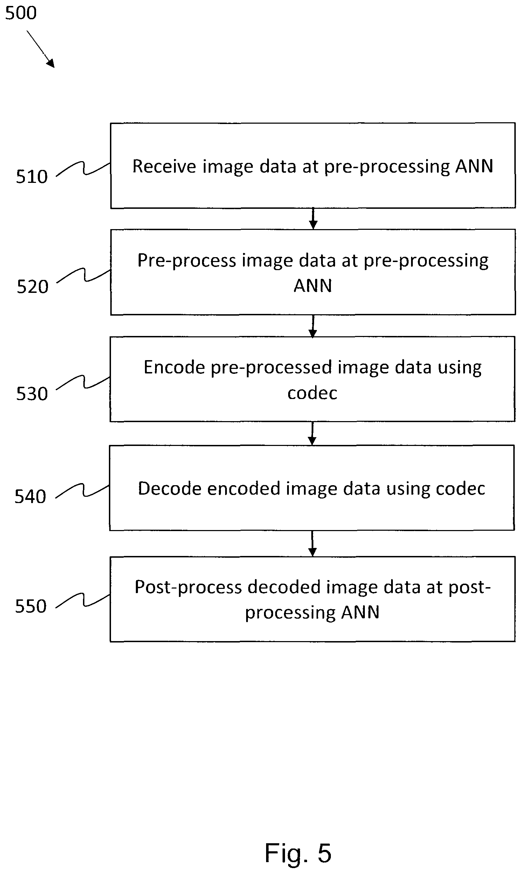

Figure 5 shows a method 500 for processing image data, according to embodiments. The method 500 may be performed at least in part by hardware and/or software.

At item 510, image data of one or more images is received at the pre-processing ANN.

At item 520, the received image data is pre-processed at the pre-processing ANN to generate pre-processed image data of the one or more images.

At item 530, the pre-processed image data is encoded in accordance with an image or video codec to generate encoded image data of the one or more images.

At item 540, the encoded image data is decoded in accordance with the image or video codec to generate decoded image data of the one or more images.

At item 550, the decoded image data is post-processed at the post-processing ANN to generate post-processed image data of the one or more images.

The pre-processing ANN and the post-processing ANN are jointly trained in an end-to-end manner using a neural codec model arranged between the pre-processing ANN and the post-processing ANN. The neural codec model acts as a proxy for the image or video codec and comprises an ANN configured to emulate rate and distortion characteristics of the image or video codec. It will be understood that the joint training of the pre-processing ANN and the post-processing ANN may occur prior to the method 500 being performed. That is, when the method 500 is performed, the training of the pre-processing ANN and the post-processing ANN (using the neural codec model) may have already taken place. In alternative embodiments, the joint training of the pre-processing ANN and the post-processing ANN occurs as part of the method 500.

In embodiments, the neural codec model is trained in an alternating manner with respect to the joint training of the pre-processor and the post-processor. The training of the pre-processor, post-processor and neural codec model optimises a combination of: an encoding bitrate associated with encoding image data using the neural codec model, and at least one image quality metric of post-processed image data generated by the post-processing ANN. Again, the training of the neural codec model may be performed prior to performance of the method 500, or may be performed as part of the method 500. In alternative embodiments, the neural codec model is not trained in an alternating manner with respect to the joint training of the pre-processor and the post-processor. That is, the parameters of the neural codec model may be fixed during the joint training process, in some cases.

In embodiments, the pre-processing ANN and the post-processing ANN are trained using the image or video codec in addition to the neural codec model. In alternative embodiments, the pre-processing ANN and the post-processing ANN are trained using the neural codec model only (i.e. not using the image or video codec).

In embodiments, the pre-processing ANN and post-processing ANN are jointly trained using an end-to-end back-propagation training process comprising a forward pass and a backward pass. During the forward pass, image data is passed from the image or video codec to the post-processing ANN. During the backward pass, gradients are back-propagated from the post-processing ANN to the neural codec model.

In embodiments, the pre-processing ANN and the post-processing ANN are trained using a stop-gradient operation. In alternative embodiments, a stop-gradient operation is not used.

In embodiments, prior to the joint training of the pre-processing ANN and the post-processing ANN, the neural codec model is pre-trained to model the behaviour of the image or video codec. In embodiments, the neural codec model is pre-trained based on an implicit encoder-decoder structure of the neural codec model.

In embodiments, the at least one image quality metric comprises at least one of: an L1 metric, a structural similarity index metric, and a video multi-method assessment fusion quality metric.

In embodiments, the pre-processing ANN and the post-processing ANN are trained by deriving a differentiable approximation of the at least one image quality metric, and using the differentiable approximation as a loss function.

In embodiments, the image or video codec is a standard image or video codec conforming to an image or video coding standard.

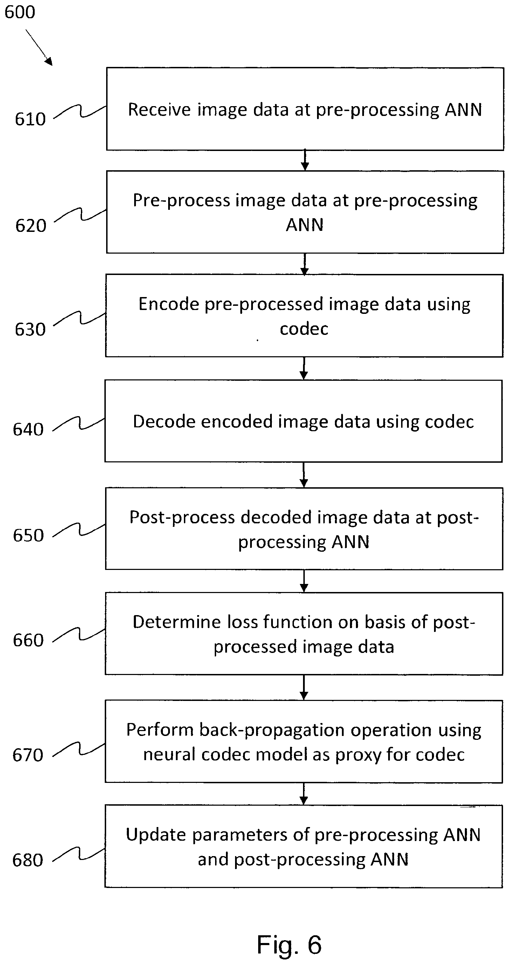

Figure 6 shows a method 600 of configuring an image processing pipeline, according to embodiments. The image processing pipeline comprises a pre-processing ANN and a post-processing ANN. The pre-processing ANN is configured to pre-process image data prior to encoding the image data, and the post-processing ANN is configured to post-process image data after encoding and decoding the image data. The method 600 may be performed at least in part by hardware and/or software.

At item 610, image data of one or more training images is received at the pre-processing ANN.

At item 620, the received image data is pre-processed at the pre-processing ANN to generate pre-processed image data of the one or more training images.

At item 630, the pre-processed image data is encoded in accordance with an image or video codec to generate encoded image data of the one or more training images.

At item 640, the encoded image data is decoded in accordance with the image or video codec to generate decoded image data of the one or more training images.

At item 650, the decoded image data is post-processed at the post-processing ANN to generate post-processed image data of the one or more training images.

At item 660, a loss function is determined on the basis of the post-processed image data. The loss function may be based at least in part on at least one visual quality metric. In embodiments, the loss function is determined based on differentiable approximations of such visual quality metrics.

At item 670, based on the loss function, a back-propagation operation is performed using a neural codec model arranged between the pre-processing ANN and the post-processing ANN. The neural codec model acts as a proxy for the image or video codec. The neural codec model comprises an ANN configured to emulate rate and distortion characteristics of the image or video codec.

At item 680, parameters (e.g. weights) of the pre-processing ANN and the post-processing ANN are updated based on the back-propagation operation, thereby to configure the image processing pipeline.

In embodiments, the method 600 comprises updating parameters of the neural codec model in an alternating manner with respect to the updating the parameters of the pre-processing ANN and the post-processing ANN.

In embodiments, the parameters of the pre-processing ANN and the post-processing ANN are updated to optimise a combination of: an encoding bitrate associated with encoding image data using the neural codec model, and at least one image quality metric of post-processed image data generated by the post-processing ANN.

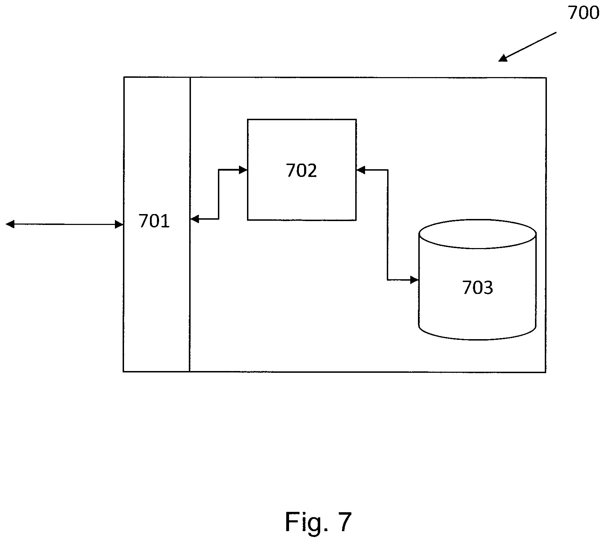

Embodiments of the disclosure include at least some of the methods described above performed on a computing device, such as the computing device 700 shown in Figure 7. The computing device 700 comprises a data interface 701, through which data can be sent or received, for example over a network. The computing device 700 further comprises a processor 702 in communication with the data interface 701, and memory 703 in communication with the processor 702. In this way, the computing device 700 can receive data, such as image data, video data, or various data structures, via the data interface 701, and the processor 702 can store the received data in the memory 703, and process it so as to perform the methods described herein, including processing data and/or generating images. At least some of the methods described herein may be performed by a computing system comprising one or more such computing devices 700. For example, one such computing device 700 may comprise or be comprised in a server, and another such computing device 700 may comprise or be comprised in a user device.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The present disclosure also provides various measures (including methods, apparatus, computing devices, computer programs, etc.) that use a preprocessing neural network prior to video encoding in conjunction with a postprocessing neural network after video decoding and a proxy neural network model for the video codec, and train the preprocessing and postprocessing neural network in an alternating manner with the training of the proxy neural network model of the video encoder in order to minimize the proxy model encoding bitrate and maximize the video reconstruction quality after decoding and post-processing with the post-processing neural network.

In embodiments, a pretraining method is used for modelling a conventional video codec with a proxy neural codec model, which uses the implicit encoder-decoder structure of the neural codec to align both video quality and rate.

In embodiments, starting with the pretrained neural codec model, the proxy neural network model for the codec is iteratively updated by switching between a real external video coded for the forward path and the proxy neural network codec for the backward path of back-propagation-based training of the preprocessing, post-processing and proxy neural network models.

In embodiments, quality of the reconstructed video after decoding and post-processing is measured with a combination of the L 1 metric, the structural similarity index metric or the video multi-method assessment fusion quality metric, and differentiable approximations of these metrics are used for the construction of a loss function for back-propagation training of the neural networks of the entire system.

The present disclosure proposes a new approach to jointly train neural pre- and post-processors (a 'neural wrapper') to improve the rate-quality performance of standards-based codecs. A neural codec is used to model the standard codec's sophisticated rate-quality characteristics via a novel approach to pre-train the codec model. A method for the training of the neural wrapper models jointly with the codec model in the middle is disclosed. Results show that the disclosed neural wrapper approach provides for consistent BD-rate improvement over standard codecs. Compared to other, known, neural methods for pre-processing and encoding, the disclosed methods allow for consistent improvement over all measured quality scores. This improvement has been seen over the extended coverage of the operational rate-quality region of modern standards.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

## Claims

1.  A computer-implemented method of processing image data, the method comprising:

    receiving, at a pre-processing artificial neural network, ANN, image data of one or more images;
    pre-processing the received image data at the pre-processing ANN to generate pre-processed image data of the one or more images;
    encoding, in accordance with an image or video codec, the pre-processed image data to generate encoded image data of the one or more images;
    decoding, in accordance with the image or video codec, the encoded image data to generate decoded image data of the one or more images; and
    post-processing the decoded image data at a post-processing ANN to generate post-processed image data of the one or more images,
    wherein the pre-processing ANN and the post-processing ANN are jointly trained in an end-to-end manner using a neural codec model arranged between the pre-processing ANN and the post-processing ANN, the neural codec model acting as a proxy for the image or video codec and comprising an ANN configured to emulate rate and distortion characteristics of the image or video codec.

2.  A computer-implemented method according to claim 1, wherein the neural codec model is trained in an alternating manner with respect to the joint training of the pre-processor and the post-processor, to optimise a combination of: an encoding bitrate associated with encoding image data using the neural codec model, and at least one image quality metric of post-processed image data generated by the post-processing ANN.

3.  A computer-implemented method according to claim 1 or claim 2, wherein the pre-processing ANN and the post-processing ANN are trained using the image or video codec in addition to the neural codec model.

4.  A computer-implemented method according to any preceding claim,

wherein the pre-processing ANN and post-processing ANN are jointly trained using an end-to-end back-propagation training process comprising a forward pass and a backward pass,

wherein, during the forward pass, image data is passed from the image or video codec to the post-processing ANN, and

wherein, during the backward pass, gradients are back-propagated from the post-processing ANN to the neural codec model.

5. A computer-implemented method according to any preceding claim, wherein the pre-processing ANN and the post-processing ANN are trained using a stop-gradient operation.

6. A computer-implemented method according to any preceding claim, wherein, prior to the joint training of the pre-processing ANN and the post-processing ANN, the neural codec model is pre-trained to model the behaviour of the image or video codec.

7. A computer-implemented method according to claim 6, wherein the neural codec model is pre-trained based on an implicit encoder-decoder structure of the neural codec model.

8. A computer-implemented method according to any preceding claim, wherein the at least one image quality metric comprises at least one of: an L 1 metric, a structural similarity index metric, and a video multi-method assessment fusion quality metric.

9. A computer-implemented method according to any preceding claim, wherein the pre-processing ANN and the post-processing ANN are trained by deriving a differentiable approximation of the at least one image quality metric, and using the differentiable approximation as a loss function.

10. A computer-implemented method according to any preceding claim, wherein the image or video codec is a standard image or video codec conforming to an image or video coding standard.

11. A computer-implemented method of configuring an image processing pipeline, the image processing pipeline comprising a pre-processing artificial neural network, ANN, configured to pre-process image data prior to encoding the image data, and a post-processing ANN configured to post-process image data after encoding and decoding the image data, the method comprising:

receiving, at the pre-processing ANN, image data of one or more training images;

pre-processing the received image data at the pre-processing ANN to generate pre-processed image data of the one or more training images;

encoding, in accordance with an image or video codec, the pre-processed image data to generate encoded image data of the one or more training images;

decoding, in accordance with the image or video codec, the encoded image data to generate decoded image data of the one or more training images;

post-processing the decoded image data at the post-processing ANN to generate post-processed image data of the one or more training images;

determining a loss function on the basis of the post-processed image data;

based on the loss function, performing a back-propagation operation using a neural codec model arranged between the pre-processing ANN and the post-processing ANN, the neural codec model acting as a proxy for the image or video codec, the neural codec model comprising an ANN configured to emulate rate and distortion characteristics of the image or video codec; and

updating parameters of the pre-processing ANN and the post-processing ANN based on the back-propagation operation, thereby to configure the image processing pipeline.

12. A computer-implemented method according to claim 11, comprising updating parameters of the neural codec model in an alternating manner with respect to the updating the parameters of the pre-processing ANN and the post-processing ANN.

13. A computer-implemented method according to claim 11 or claim 12, wherein the parameters of the pre-processing ANN and the post-processing ANN are updated to optimise a combination of: an encoding bitrate associated with encoding image data using the neural codec model, and at least one image quality metric of post-processed image data generated by the post-processing ANN.

14. A computing system comprising:

one or more processors; and
memory,
wherein the computing system is arranged to perform, using the one or more processors, a method according to any preceding claim.

15. A computer program product arranged, when executed on a computing system comprising one or more processors and memory, to cause the computing system to perform, using the one or more processors, a method according to any of claims 1 to 13.

Fig. 1

Fig. 2

---

**Algorithm 1** End-to-end training pipeline of the pre and postprocessor

---

**Require:** $I_{in}$, batch of video frames
**Require:** $\theta_M$, parameters of the codec model
**Require:** $\theta_P$, parameters of the preprocessor
**Require:** $\theta_O$, parameters of the postprocessor
**Require:** $\alpha_L$, learning rate for training
    **for** all $I_{in}$ **do**
        $I_P \leftarrow P(I_{in})$
        $(I_C, R_C) \leftarrow C(I_P)$
        $(I_M, R_M) \leftarrow M(I_P)$
        Compute $L_M$ using Eq. (8)
        $\theta_M \leftarrow \theta_M - \alpha_L \nabla_{\theta_M} L_M$
        Generate $I_{O_{in}}$ using Eq. (7)
        $I_{out} \leftarrow O(I_{O_{in}})$
        Compute $L$ using Eq. (3)
        $\theta_P \leftarrow \theta_P - \alpha_L \nabla_{\theta_P} L$
        $\theta_O \leftarrow \theta_O - \alpha_L \nabla_{\theta_O} L$
    **end for**

---

## Fig. 3

Fig. 4A

Fig. 4B

500

```
        ┌──────────────────────────────────────────┐
  510   │   Receive image data at pre-processing ANN │
        └──────────────────────────────────────────┘
                            │
                            ▼
        ┌──────────────────────────────────────────┐
  520   │   Pre-process image data at pre-processing │
        │                   ANN                      │
        └──────────────────────────────────────────┘
                            │
                            ▼
        ┌──────────────────────────────────────────┐
  530   │   Encode pre-processed image data using    │
        │                  codec                     │
        └──────────────────────────────────────────┘
                            │
                            ▼
        ┌──────────────────────────────────────────┐
  540   │   Decode encoded image data using codec    │
        └──────────────────────────────────────────┘
                            │
                            ▼
        ┌──────────────────────────────────────────┐
  550   │   Post-process decoded image data at post- │
        │              processing ANN                │
        └──────────────────────────────────────────┘
```

Fig. 5

600

610 — Receive image data at pre-processing ANN

620 — Pre-process image data at pre-processing ANN

630 — Encode pre-processed image data using codec

640 — Decode encoded image data using codec

650 — Post-process decoded image data at post-processing ANN

660 — Determine loss function on basis of post-processed image data

670 — Perform back-propagation operation using neural codec model as proxy for codec

680 — Update parameters of pre-processing ANN and post-processing ANN

Fig. 6

700

701

702

703

Fig. 7

**EUROPEAN SEARCH REPORT**

Application Number

EP 24 38 6075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIU KAITIAN ET AL: "Codec-Simulation Network for Joint Optimization of Video Coding With Pre- and Post-Processing", IEEE OPEN JOURNAL OF CIRCUITS AND SYSTEMS, IEEE, vol. 2, 22 November 2021 (2021-11-22), pages 648-659, XP011889094, DOI: 10.1109/OJCAS.2021.3124243 [retrieved on 2021-11-19] | 1-4,6-15 | INV. H04N19/85 G06N3/045 G06N3/084 |
| Y | * figures 1, 2, 4 * <br> * section I * <br> * section II * <br> * section II.A * <br> * section II.D * <br> * section III.A * <br> * section III.B * <br> * table 4 * <br> ----- | 5 | |
| Y | US 2023/325639 A1 (ZHANG HONGLEI [FI] ET AL) 12 October 2023 (2023-10-12) <br> * paragraph [0422] * <br> ----- | 5 | |
| A | US 2021/211682 A1 (ANDREOPOULOS IOANNIS [GB] ET AL) 8 July 2021 (2021-07-08) <br> * paragraph [0054] - paragraph [0068] * <br> ----- | 1-15 | |

TECHNICAL FIELDS SEARCHED (IPC)

H04N
G06N

The present search report has been drawn up for all claims

| Place of search | Date of completion of the search | Examiner |
|---|---|---|
| Munich | 19 November 2024 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 6075

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | Publication date |
|---|---|---|---|
| US 2023325639 A1 | 12-10-2023 | NONE | |
| US 2021211682 A1 | 08-07-2021 | EP 3846475 A1 | 07-07-2021 |
| | | EP 3846476 A1 | 07-07-2021 |
| | | EP 3846477 A1 | 07-07-2021 |
| | | EP 3846478 A1 | 07-07-2021 |
| | | US 2021211682 A1 | 08-07-2021 |
| | | US 2021211684 A1 | 08-07-2021 |
| | | US 2021211739 A1 | 08-07-2021 |
| | | US 2021211741 A1 | 08-07-2021 |

EPO FORM P0459

For more details about this annex : see Official Journal of the European Patent Office, No. 12/82